# EUROPÄISCHE PATENTSCHRIFT

(11) **EP 0 906 014 B1**
(45) Veröffentlichungstag und Bekanntmachung des Hinweises auf die Patenterteilung: **27.03.2002**
(21) Anmeldenummer: 97923981.1
(22) Anmeldetag: 22.05.1997
(51) Int. Cl.: A01N 25/34, A01N 25/10

(54) **Formkörper, die agrochemische Wirkstoffe freisetzen**
Shaped bodies which release agrochemicals
Corps moulés libérant des principes actifs agrochimiques

(30) Priorität: 04.06.1996 DE 19622355
(43) Veröffentlichungstag der Anmeldung: 07.04.1999
(73) Patentinhaber: BAYER AG, 51368 Leverkusen (DE)
(72) Erfinder: PODSZUN, Wolfgang, D-51061 Köln (DE); PRIESNITZ, Uwe, D-42657 Solingen (DE); HÖLTERS, Jürgen, D-51375 Leverkusen (DE); REHBOLD, Bodo, D-50858 Köln (DE); ISRAELS, Rafel, D-51373 Leverkusen (DE)
(86) Internationale Anmeldenummer: EP9702624
(87) Internationale Veröffentlichungsnummer: WO9746094

(56) Entgegenhaltungen:
- EP-A- 0 344 118
- EP-A- 0 453 112
- EP-A- 0 564 945
- DE-A- 3 432 573
- DE-A- 4 432 126
- DE-A- 4 440 528
- US-A- 3 968 201
- US-A- 4 795 641
- US-A- 5 536 505
- DATABASE WPI Section Ch, Week 8315 Derwent Publications Ltd., London, GB; Class A97, AN 83-36012K XP002043617 & JP 58 039 602 A (NITTO ELECTRIC IND CO) , 8.März 1983 in der Anmeldung erwähnt

## Beschreibung

Die Erfindung betrifft Formkörper, die agrochemische Wirkstoffe freisetzen, zur Behandlung von Holzgewächsen, enthaltend ein wasserunlösliches, thermoplastisch verarbeitbares Polymer, ein wasserlösliches Polymer und einen oder mehrere agrochemische Wirkstoffe.

Die Einarbeitung von agrochemischen Wirkstoffen in Polymere ist bekannt, z.B. aus DE-A 4432126, WO 91/4732, WO 94/8455, EP-A 524831, WO 91/3940, EP-A 404 727, EP-A 254 196, JP-A 58/39 602.

Aus EP-A 0 344 118 sind Polymermischungen aus wasserhaltigem, hydrophilem Polymer und wasserunlöslichem, thermoplastischem Polymer als Trägermaterial für Wirkstoffe bekannt, wobei die aus diesem Material erhaltenen Formkörper eine verbesserte Dimensionsstabilität an feuchter Luft aufweisen. In Wasser quellen diese Materialien sehr stark an und vergrößern dabei ihr Volumen um ein vielfaches.

Aus der EP-A 0 564 945 ist eine Methode zur Pflanzenbehandlung bekannt, bei der Formkörper aus agrochemischen Wirkstoffen und einem festen Trägermaterial in den Saftstrom der Pflanze eingebracht werden.

In der EP-A 0453 112 und der US-A 4795 641 werden zahlreiche Formkörper mit einem Gehalt an einem wasserunlöslichen Polymer, einem wasserlöslichen Polymer und einem agrochemischen Wirkstoff beschrieben. Entsprechende feste Formulierungen, die aus Polyvinylacetaten und Polyvinylpyrrolidonen bestehen, werden in diesen Druckschriften aber nicht offenbart.

Die US-A 3 968 201 betrifft feste Formkörper, für deren Herstellung wasserunlösliche und wasserlösliche Polymere, wie Polyvinylacetat und Polyvinylpyrrolidon, in Frage kommen. Eine Mischung aus diesen beiden Polymeren wird jedoch nicht speziell erwähnt. Außerdem werden in dieser Druckschrift keine agrochemischen Wirkstoffe als aktive Komponenten erwähnt.

Aus der DE-A 44 40 528 geht hervor, dass agrochemische Wirkstoffe in Pflanzen appliziert werden können, indem man die Pflanzen mit Formkörpern behandelt. Die Kombination von wasserunlöslichem und wasserlöslichem Polymer wird aber nicht beschrieben.

Die DE-A 34 32 573 ist schließlich auf Hydrogele gerichtet, die als Systeme zur kontrollierten Freigabe der enthaltenen Wirkstoffe fungieren. Implantate werden allerdings nicht erwähnt.

Gegenstand der vorliegenden Erfindung sind Formkörper zur Behandlung von Holzgewächsen, wobei die Formkörper, die
a) mindestens einen agrochemischen Wirkstoff,
b) ein wasserunlösliches, thermoplastisch verarbeitbares Polymer, ausgewählt aus der Gruppe bestehend aus Polyvinylacetat und Poly(vinylacetat-co-ethylen),
c) ein wasserlösliches Polymer ausgewählt aus der Gruppe bestehend aus Poly-(pyrrolidon-co-vinylacetat) und Polyvinylpyrrolidon und
d) gegebenenfalls Hilfsstoffe
enthalten und die agrochemischen Wirkstoffe freisetzen.

Gegenstand der Erfindung ist auch ein Verfahren zur Herstellung der Formkörper, welches darin besteheht, dass man ein Gemisch aus
a) mindestens einem agrochemischen Wirkstoff,
b) einem wasserunlöslichen, thermoplastisch verarbeitbaren Polymer, ausgewählt aus der Gruppe bestehend aus Polyvinylacetat und Poly(vinylacetat-co-ethylen),
c) einem wasserlöslichen Polymer ausgewählt aus der Gruppe bestehend aus Poly-(pyrrolidon-co-vinylacetat) und Polyvinylpyrrolidon und
d) gegebenenfalls Hilfsstoffen
extrudiert oder durch Spritzgießen verarbeitet.

Die Verwendung der erfindungsgemäßen Formkörper erfolgt in der Weise, dass sie in vorgeformte Höhlungen im Holzgewächs eingesetzt werden, wobei das Volumen der Formkörper das Volumen der Höhlungen zu 10 bis 95 % ausfüllt.

Die erfindungsgemäßen Formkörper sind zur Behandlung von Holzgewächsen aller Art, insbesondere von Bäumen und Sträuchern, geeignet. Es sind Zier- und Nutzgehölze eingeschlossen. Besonders vorteilhaft ist die Anwendung bei Bäumen. Der Stammumfang der Bäume kann dabei in einem weiten Bereich, beispielsweise von 6 cm bis 200 cm, variieren.

Die Größe der Hohlform richtet sich nach dem Umfang der Sprossachsen (Stamm, Ast, Zweig), in denen das Implantat eingesetzt werden soll. Für Stämme mit einem Umfang ab 20 cm sind zylindrische Hohlformen mit einem Duchmesser von 0,2 bis 1,0 cm und einer Länge von 2,0 bis 4,0 cm besonders gut geeignet. Bei dickeren Stämmen werden zweckmäßigerweise mehrere Hohlformen angebracht.

Die Hohlform kann durch Bohren, Stanzen, Fräsen oder Sägen erzeugt werden.

Das Volumen des Formkörpers füllt die Hohlform zu 10 bis 95 %, vorzugsweise zu 50 bis 90 %, aus. Die Form der Körper ist für die Wirksamkeit unkritisch, sie kann stäbchenförmig, zylindrisch oder kegelförmig sein. Kegelförmige Körper, deren Basisfläche dem Durchmesser der Hohlform entspricht, können so eingesetzt werden, dass die Hohlform dicht abgeschlossen wird. Es ist aber auch möglich, den dichten Abschluss mit einer Verschlusskappe oder einer Verschlusspaste, beispielsweise aus einem handelsüblichen Baumwachs herzustellen.

Als agrochemische Wirkstoffe seien Insektizide, Fungizide und Herbizide genannt.

Bei den Insektiziden seien bevorzugt genannt organische Phosphorverbindungen wie Phosphorsäureester, Carbamate, Pyrethroide, Harnstoffderivate wie Benzoylharnstoffe, Triazine, Agonisten oder Antagonisten der nicotinogen Acetylcholinrezeptoren von Insekten. Zu erwähnen seien auch Juvenilhormone und juvenoide synthetische Verbindungen wie z.B. Pyriproxyfen, Methoprene, Hydroprene.

Zu den Pyrethroiden gehören:
Allethrin = 2,2-Dimethyl-3-(2-methyl-1-propenyll)-cyclopropan-carboxylat des 2-Methyl-4-oxo-3-(2-propenyl)-2-cyclopenten-1-yl.
Barthrin = 2,2-Dimethyl-3-(2-methyl-1-propenyl)-cyclopropan-carboxylat des (6-Chloro-1,3-benzodioxol-5-yl)-methyl.
Bioresmethrin = 2,2,3-(2-Methyl-1-propenyl)carboxylat des [5-(Phenyl-methyl)-3-furanyl]-methyl.
Bromethrin = 2-(2,2-Dibromovinyl)-3,3-dimethylcyclopropan-carboxylat des (5-Benzyl-3-furyl)methyl.
Cycloethrin = 2,2-Dimethyl-3-(2-methyl-propenyl)-cyclopropan-carboxylat des 3-(2-Cyclopenten-1-yl)-2-methyl-4-oxo-2-cyclopenten-1-yl.
Dimethrin = 2,2,3-(2-Methyl-1-propenyl)-carboxylat des 2,4-Dimethylbenzyl.
Pyresmethrin = trans-(+)-3-Carboxy-α,2,2-trimethylcyclopropan-acrylat des 3-[(5-benzyl-3-furyl)-methyl]methyl.
Resmethrin = 2,2,3-(2-Methyl-1-propenyl)-carboxylat des (5-Benzyl-3-furyl)methyl.
Tetramethrin = 2,2,3-(2-Methyl-1-propenyl)-carboxylat des (1,3,4,5,6,7-Hexahydro-1,3-di-oxo-2H-isoindol-2-yl)-methyl.
K-othrin = 2,2-Dimethylcyclopropan-carboxylat des (5-Benzyl-3-furyl)-methyl-trans-(+)-3-cyclopentyliden-methyl.
Permethrin (FMC 33297) (NRDC 143) = 2,2-Dimethylcyclopropan-carboxylat des m-Phenoxybenzyl-cis-trans-(+)-3-(2,2-dichlorovinyl).
Cinerin I = 2,2,3-(2-Methyl-1-propenyl)-carboxylat des 2-(2-Butenyl)-4-hydroxy-3-methyl-2-cyclopenten-1-on.
Pyrethrin I = 2,2,3-(2-Methyl-1-propenyl)-carboxylat des 4-Hydroxy-3-methyl-2-(2,4-pentadienyl)-2-cyclopenten-1-on.
Cinerin II = 2,2,3-(2-Methyl-1-propenyl)-carboxylat des 2-(2-Butenyl)-4-hydroxy-3-methyl-2-cyclopenten-1-on.
Pyrethrin II = 2,2,3-(2-Methyl-1-propenyl)-carboxylat des 4-Hydroxy-3-methyl-2-(2,4-pentadienyl)-2-cyclopenten-1-on.
Jasmolin I = 4',5'-Dihydropyrethrin-I.
Jasmolin II = 4',5'-Dihydropyrethrin-II.
Biothanometrin = 2,2-Dimethyl-3-(2-cyclopentylvinyl)-cyclopropan-carboxylat des (5-Benzyl-3-furyl)methyl.
Bioethanomethrin = 2-(2,2-Dichlorovinyl)-3,3-dimethyl-cyclopropan-carboxylat des (3-Diphenylether)methyl.
Cypermethrin = 2-(2,2-Dichlorovinyl)-3,3-dimethyl-cyclopropan-carboxylat des (3-Diphenylether)-cyanomethyl.
Decamethrin = 2-(2,2-Dibromovinyl)-3,3-dimethyl-cyclopropan-carboxylat des (3-Diphenylether)-cyanomethyl.
ES-56 = 2,2,3-(2-Methyl-1-propenyl)carboxylat des 2,3-Dihydrofuran.
Fenpropanate (S-3206) = 2,2-Dimethyl-3,3-dimethyl-cyclopropan-carboxylat des (3-Diphenylether)cyanomethyl.
Fenvalerate (S-5602) = [(p-Chlorophenyl)-(isopropyl)]-acetat des (3-Diphenylether)-cyanomethyl.
(S-5439) = [(p-Chlorophenyl)-(isopropyl)]-acetat des (3-Diphenylether)methyl.
Cis-methrin = 2,2,3-(2-Methyl-1-propenyl)carboxylat des 5-Benzyl-3-furylmethyl.
Phenothrin = 2,2,3-(2-Methyl-1-propenyl)carboxylat des (3-Phenoxybenzyl)methyl.
Cyfluthrin = 2-(2,2-Dichlorvinyl)-3,3-dimethylcyclopropan-carboxylat des 4-Fluor-3-diphenylether-cyanomethylol.

Zu den Carbamaten gehören:
Aldicarb = 2-Methyl-2-(methylthio)-propanol-O-[(methylamino)carbonyl]oxim.
Aldoxycarb = 2-Methyl-2-(methylsulfonyl)propanol-O-[methylamino)carbonyl]oxim.
Aminocarb = Methylcarbamat des 4-Dimethylamino-3-methylphenyl.
Bendiocarb = N-Methylcarbamat des 2,2-Dimethyl-benzo-1,3-dioxol-4-yl.
Bufencarb = Methylcarbamat des 3-(1-Methylbutyl)phenyl und Methylcarbamat des 3-(1-Ethylpropyl)-phenyl (3:1).
Butacarb = Methylcarbamat des 3,5-Bis-(1,1-dimethylethyl)phenyl.
Butocarboxim = 3-Methylthio-2-butan-O-[(methylamino)carbonyl]oxim.
Butoxycarboxim = 3-Methylthio-2-butanon-O-[(methylamino)carbonyl]oxim.
2-sec.-Butylphenylmethylcarbamat = Methylcarbamat des 2-(1-Methylpropyl)phenyl.
Carbanolate = Methylcarbamat des 2-Chloro-4,5-dimethylphenyl.
Carbaryl = Methylcarbamat des 1-Naphthalenyl.
Carbofuran = Methylcarbamat des 2,3-Dihydro-2,2-dimethyl-7-benzofuranyl.
Cartap = Carbamothioat des S,S'-[2-(dimethylamino)-1,3-propandiyl].
Decarbofuran = Methylcarbamat des 2,3-Dihydro-2-methylbenzofuran-7-yl.
Dimetilan = Dimethylcarbamat des -[(dimethylamino)-carbonyl]-5-methyl-1H-pyrazol-3-yl.
Dioxocarb = Methylcarbamat des 2-(1,3-Dioxolan-2-yl)-phenyl.
Ethiofencarb = Methylcarbamat des 2-Ethylthiomethylphenyl.
Fenethacarb = Methylcarbamat des 3,5-Diethylphenyl.
Formetanate = Methylcarbamat des 3-Dimethylaminoethylenaminophenyl.
Formparanate = Methylcarbamat des 3-Methyl-4-dimethylamino-methylenamino-phenyl.
Isoprocarb = Methylcarbamat des 2-Isopropylphenyl.
Methiocarb = Methylcarbamat des 3,5-Dimethyl-4-methylthiophenyl.
Methomyl = Methyl-N-[[(methylamino)carbonyl]oxy]-ethan-imidothioat.
Mexacarbate = Methylcarbamat des 4-Dimethylamino-3,5-dimethylphenyl.
Nabam = 1,2-Ethandiylbis(carbamodithioat)disodium.
Nitrilacarb = zu Cl₂, (4,4-Dimethyl-5-methylamino-carbonyloximino)pentannitril.
Oxamil = Methyl-2-(dimethylamino)-N-[[(methylamino)-carbonyl]oxy]-2-oxoethaniminothioat.
Pirimicarb = Dimethylcarbamat des 2-(Dimethylamino)-5,6-dimethyl-4-pyrimidinyl.
Promecarb = Methylcarbamat des 3-Methyl-5-(1-methylethyl)phenyl.
Propoxur = Methylcarbamat des 2-(1-Methylethoxy)phenyl.
Thiofanox = 3,3-Dimethyl-(methylthio)-2-butanon-O-[(methylamino)carbonyl]oxim.
Thiocarboxime = Carbamat des 1-(2-Cyanoethylthio)-ethylenaminomethyl.
Thiram = Diamid des Acid-tetramethylthioperoxy-dicarbonic.
Trimethylphenylmethylcarbamat = Methylcarbamat des 3,4,5-Trimethylphenyl.
3,4-Xylylmethylcarbamat = Methylcarbamat des 3,4-Dimethylphenyl.
3,5-Xylylmethylcarbamat = Methylcarbamat des 3,5-Dimethylphenyl.

Zu den phosphororganischen Verbindungen gehören:
Acephate = O,S-Dimethylacetylphosphoroaminothioat.
Amidithion = S-(N-2-methoxyethylcarbamoylmethyl)-dimethylphosphorodithioat.
Amiton = S-[2-(diethylamino)ethyl]-diethylphosphorothioat.
Athidation = O,O-Diethyl-S-5-methoxy-2-oxo-1,3,4-thiadiazol-3-yl-methylphosphorodithioat.
Azinphos-ethyl = O,O-Diethyl-S-[(4-oxo-1,2,3-benzotriazin-3(4H)-yl)methyl]phosphorodithioat.
Azinphos-methyl = O,O-Dimethyl-S-[(4-oxo-1,2,3-benzotriazin-3(4H)-yl)methyl]-phosphorodithioat.
Azothioate = O,O-Dimethyl-O-[p-(p-chlorophenylazo)-phenyl]phosphorothioat.
Bromophos = =-(4-Bromo-2,5-dichlorophenyl)-O,O-dimethylphosphorothioat.
Bromophos-ethyl ==-(4-Bromo-2,5-dichlorophenyl)-O,O-diethylphosphorothioat.
Butonate = O,O-Dimethyl-1-butyryl-1-butyryloxy.
Carbophenothion = S-[[(4-Chlorophenyl)thio]methyl]-O,O-diuethylphosphorodithioat.
Chlorfenvinphos = 2-Chloro-1-(2,4-dichlorophenyl)-ethenyl-phosphat des Diethyl.
Chlormephos = S-Chloromethyl-O,O-diethylphosphorodithioat.
Chlorphoxim = 7-(2-Chlorphenyl)-4-ethoxy-3,5-dioxa-6-aza-4-phosphaoct-6-en-8-mtril-4-sulfur.
Chlorprazophos = O,O-Diethyl-O-3-chloro-7-methyl-pyrazolo[1,5-a]pyrimidin-2-yl-phosphorothioat.
Chlorpyrifos = O,O-Diethyl-O-3,5,6,-trichloro-2-pyridylphosphorothioat.
Chlorpyrifos-methyl = O,O-Dimethyl-O-3,5,6-trichloro-2-pyridylphosphorothioat.
Chlorthiophos = O-2,5-Dichloro-4-(methylthio)-phenyl-O,O-diethylphosphorothioat.
Coumaphos = O-3-Chloro-4-methylcoumarin-7-yl-O,O-diethylphosphorothioat.
Coumithoat = O,O-Diethyl-O-(7,8,9,10-tetrahydro-6-oxo-6H-dibenzo[b,d]pyran-3-yl-phosphorothioat.
Cortoxyphos = 1-Phenylethyl(E)-3-[(dimethoxyphosphonyl)oxy]-2-butenoat.
Cruformate = 2-Chlor-4-(1,1-dimethylethyl)phenylmethyl-methylphosphoramidat.
Cyanofenphos = O-4-Cyanophenyl-O-ethylphenylphosphonothioat.
Cyanophos = O-4-Cyanophenyl-O,O-dimethylphosphorothioat.
Cyanthoate = O,O-Diethyl-S-[N-(1-cyano-1-methylethyl)]carbamoylmethylphosphorothioat.
Demephion = O,O-Dimethyl-O-2-methylthioethylphosphorothioat und O,O-Dimethyl-S-2-methylthioethylphosphorothioat.
Demeton = O,O-Diethyl-O-2-ethylthioethylphosphorothioat und O,O-Diethyl-S-2-ethylthioethylphosphorothioat.
Demeton-S-methyl = O,O-Dimethyl-S-2-ethylthioethylphosphorothioat.
Demeton-S-methyl-sulfon = S-2-Ethylsulfonylethyl-O,O-dimethylphosphorothioat.
Demeton-S = O,O-Diethyl-S-[2-(ethylthio)ethyl]phosphorothioat.
Demeton-O = O,O-Diethyl-O-[2-(ethylthio)ethyl]phosphorothioat.
Demeton-O-methyl = O,O-Dimethyl-O-[2-(ethylthio)ethyl]phosphorothioat.
Dialifos = S-[2-Chloro-1-(1,3-dihydro-1,3-dioxy-2H-isoindol-2-yl)ethyl]-O,O-diethylphosphorodithioat.
Diazinon = O,O-Diethyl-O-[6-methyl-2-(1-methylethyl)-4-pyrimidinyl]phosphorothioat.
Dichlorfenthion = O,O-Diethyl-O-(2,4-dichlorophenyl)-phosphorothioat.
O-2,4-Dichlorophenyl-O-ethylphenylphosphonothioat.
Dichlorvos = Dimethyl-2,2-dichloroethenylphosphat.
Dicrotophos = Dimethyl-3-(dimethylamino)-1-methyl-3-oxo-1-propenylphosphat
Dimefox = Oxid des Bis(dimethylamino)fluorophosphin.
Dimethoate = O,O-Dimethyl-S-[2-(methylamino)-2-oxo-ethyl]phosphorodithioat.
1,3-Di-(methoxycarbonyl)-1-propen-2-yl-dimethylphosphat = Dimethyl-3-[(dimethoxyphosphinyl)oxy]-2-pentendioat.
Dioxathion = S,S'-1,4-Dioxan-2,3-diyl-O,O',O'-tetraethyl-di-(phosphorodithioat).
Disulfoton = O,O-Diethyl-S-2-ethylthioethylphosphorodithioat.
EPN = O-Ethyl-O-4-nitrophenyl-phenylphosphonothioat.
Endothion = O,O-Dimethyl-S-(5-methoxy-4-pyron-2-yl-methyl)phosphorothioat.
Ethion = O,O,O",O"-Tetraehyl-S,S'-methylen-di(phosphorodithioat).
S-Ethylsulfinylmethyl-O,O-diisopropylphosphorodithioat.
Ethoat-methyl= O,O-Dimethyl-S-(N-ethylcarbamoyl-methyl)phosphorodithioat.
Ethoprophos = O-Ethyl-S,S-dipropylphosphorodothioat.
Etrimfos = O-(6-Ethoxy-2-ethyl-4-pyrimidinyl)-O,O-dimethylphosphorothioat.
Famphur = O,O-Dirnethyl-O-p-(dimethylsulfamoyl)-phenylphosphorothioat.
Fenchlorphos = O,O-Dimethyl-O-(2,4,5-trichlorophenyl)-phosphorothioat.
Fensulfothion = O,O-Diethyl-O-4-(methylsulfinyl)phenylphosphorothioat.
Fenthion = O,O-Dimethyl-O-[3-methyl-4-(methylthio)-phenyl]phosphorothioat.
Fonophos = O-Ethyl-S-phenylethylphosphonodithioat.
Formothion = S-[2-(formylmethylamino)-2-oxoethyl]-O,O-dimethylphosphorodithioat.
Fospirate = Dimethyl-3,5,6-trichloro-2-pyridylphosphat.
Fosthietan = Diethyl-1,3-dithietan-2-yl-iden-phosphoramidat.
Heptenophos = 7-Chlorobicyclo[3,2,0]-hepta-2,6-dien-6-yl-dimethylphosphat.
Iodofenphos = O-2,5-Dichloro-4-iodophenyl-O,O-dimethyl-phosphorothioat.
Isofenphos = 1-Methylethyl-2-[[ethoxy]-(1-methylethyl)amino[phosphinothioyl]-oxy]benzoat.
Leptophos = O-4-Bromo-2,5-dichlorphenyl-O-methylphenylphosphonothioat.
Lythidathion = O,O-Dimethyl-S-(5-ethoxy-2,3-dihydro-2-oxo-1,3,4-thiadiazol-3-yl-methyl)phosphorodithioat.
Malathion = Diethyl[(dimethoxyphosphinothioyl)thio]butandioat.
Mazidox = N,N,N',N'-Tetramethylphosphorodiamidic-acid.
Mecarbam = Methyl-ethyl[[(diethoxyphosphinothioyl)thio]-acetal]carbamat.
Mecarphon = N-Methylcarbonyl-N-methyl-carbamoyl-methyl-O-methylmethylphosphonodithioat.
Menazon = S-[(4,6-Diamino-1,3,5-triazin-2-yl)methyl]-O,O-dimethylphosphorodithioat.
Mephosfolan = Diethyl-4-methyl-1,3-dithiolan-2-yl-dinen-phosphoroamidat.
Methamidophos = O,S-Dimethylphosphoramidothioat.
Methidation = S-[[5-Methoxy-2-oxo-1,3,4-thiadiazol-3(2H)-yl]methyl]-O,O-dimethylphosphorodithioat.
Methocrotophos = Dimethyl-cis-2-(N-methoxy-N-methyl)-carbamoyl)-1-methylvinylphosphat.
2-Sulfur des 2-Methoxy-4H-benzo-1,3,2-dioxaphosphorin.
Methyl-carbophenotion = S-[[(4-Chlorphenyl)thio]-methyl]-O,O-dimethylphosphorodithioat.
Mevinphos = Methyl-3-[(dimethoxyphosphinyl)oxy]-2-buenoat.
Monocrotophos = Dimethyl-1-methyl-3-(methylamino)-3-oxo-1-propenylphosphat.
Morphotion = O,O-Dimethyl-S-(morpholino-cabonylmethyl)-phosphoradithioat.
Naled = Dimethyl-1,2-dibromo-2,2-dichloroethylphosphat.
Omethoate = O,O-Dimethyl-S-[2-(methylamino)-2-oxoethyl]phosphorothioat.
Oxydimeton-methyl = S-[2-(Ethylsulfinyl)ethyl]-O,O-dimethylphosphorothioat.
Oxydisulfoton = O,O-Diethyl-S-[2-(ethyl-sulfinyl)-ethyl]-phosphorodithioat.
Parathion = O,O-Diethyl-O-4-nitrophenyl-phosphorothioat.
Parathion-methyl = O,O-Dimethyl-O-4-nitrophenyl-phosphorothioat.
Phenkapton = O,O-Diethyl-S-(2,5-dichloro-phenylthiomethyl)-phosphorodithioat.
Phenthoate = Ethyl-α[(dimethoxyphosphinothioyl)thio]benzenacetat.
Phorate = O,O-Diethyl-S-ethylthiomethyl-phosphorodithioat.
Phosalone = S-[[(6-Chloro-2-oxo-3)(2H)-benzoxazolyl]-(methyl)]-O-diethylphosphorodithioat.
Phosfolan = Diethyl-1,3-dithiolan-2-yliden-phosphoramidat.
Phosmet = S-[(1,3-Dihydro-1,3-dioxo-2H-isoindol-2-yl)methyl]-O,O-dimethylphosphorodithioat.
Phosnichlor = O,O-Dimethyl-O-4-chloro-3-nitrophenyl-phosphorothioat.
Phosphamidon = 2-Chloro-3-(diethylamino)-1-methyl-3-oxo-1-propenylphosphat des Dimethyl.
Phoxim = -[[Diethoxyphosphinothioyl)oxy]imino)-benzenacetonitril.
Pirimiphos-ethyl = O-[2-(Diethylamino)-6-methyl-4-pyrimidinyl)]-O,O-diethylphosphorothioat.
Pirimiphos-methyl = O-[2-(Diethylamino)-6-methyl-4-pyrimidinyl)]-O,O-dimethylphosphorothioat.
Profenofos = O-(4-bromo-2-chlorphenyl)-O-ethyl-S-propylphosphorothioat.
Propetamphos = (E)-1-Methylethyl-3-[[(ethylamino)-methoxyphosphinothioyl]oxy]-2-butenoat.
Prothidathion = O,O-Diethyl-S-(2,3-dihydro-5-isopropyl-2-oxo-1,3,4-thiadiazol-3-yl-methyl)-phosphorodithioat.
Prothoate = O,O-Diethyl-S-[2-(1-methylethyl)amino-2-oxoethyl]-phosphorodithioat.
Quinalphos = O,O-Diethyl-O-2-quinoxalinylphosphorothioat.
Quinothion = O,O-Diethyl-2-methylquinolin-4-yl-phosphorothioat.
Quintiofos = O-Ethyl-O-8-quinolylphenyl-phosphorothioat.
Sophamide = O,O-Dimethyl-S-(N-methoxy-methyl)-carbamoyl-methylphosphorodithioat.
Sulfotepp = Thiodiphosphat des Tetraethyl.
Sulfprofos = O-Ethyl-O-(4-methylthiophenyl)-S-propylphosphorodithioat.
Temephos = O,O'-(Thiodi-4,1-phenylen)-O,O,O',O'-tetramethyl-di(phosphorodithioat).
Tepp = Diphosphate des Tetraethyl.
Terbufos = S-[(1,1-Dimethylethyl)thiomethyl]-O,O-diethylphosphorodithioat.
Tetrachlorvinphos = trans-2-Chloro-1-(2,4,5-trichlorophenyl)vinyl-phosphate des Dimethyl.
O,O,O',O'-Tetrapropyl-dithiopyrophosphat = Thiodiphosphat des Tetrapropyl.
Thiometon = O,O-Dimethyl-S-[2-(ethylthio)ethyl]-phosphorodithioat.
Thionazin = O,O-Diethyl-O-pyrazinylphosphorothioat.
Triazophos = O,O-Diethyl-O-(phenyl-1H-1,2,4-triazol-3-yl)phosphorothioat.
Trichloronate = O-Ethyl-O-2,4,5-trichlorophenyl-ethylphosphonothioat.
Trichlorphon = Dimethyl-(1-hydroxy-2,2,2-trichloro-ethyl)-phosphonate.
Vamidothion = O,O-Dimethyl-S-[2-(1-methylcarbamoyl)-ethylenethyl]-phosphorothioat.

Zu den Benzoylharnstoffen gehören Verbindungen der Formel (V): 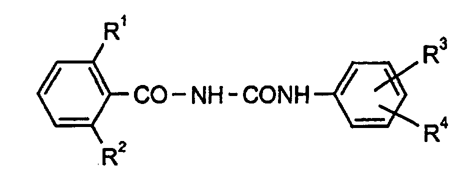 wobei
- R¹: für Halogen steht,
- R²: für Wasserstoff oder Halogen steht,
- R³: für Wasserstoff, Halogen oder C₁₋₄-Alkyl steht,
- R⁴: für Halogen, 1-5-Halogen-C₁₋₄-alkyl, C₁₋₄-Alkoxy, 1-5-Halogen-C₁₋₄-alkoxy, C₁₋₄-Alkylthio, 1-5-Halogen-C₁₋₄-alkylthio, Phenoxy oder Pyridyloxy, die gegebenenfalls substituiert sein können durch Halogen, C₁₋₄-Alkyl, 1-5-Halogen-C₁₋₄-alkyl, C₁₋₄-Alkoxy, 1-5-Halogen-C₁₋₄-alkoxy, C₁₋₄-Alkylthio, 1-5-Halogen-C₁₋₄-alkylthio.

Insbesondere seien Benzoylharnstoffe der Formel genannt:

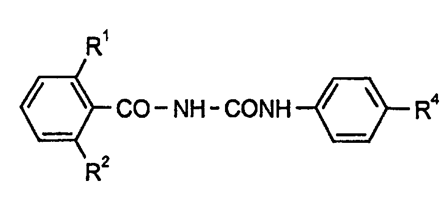

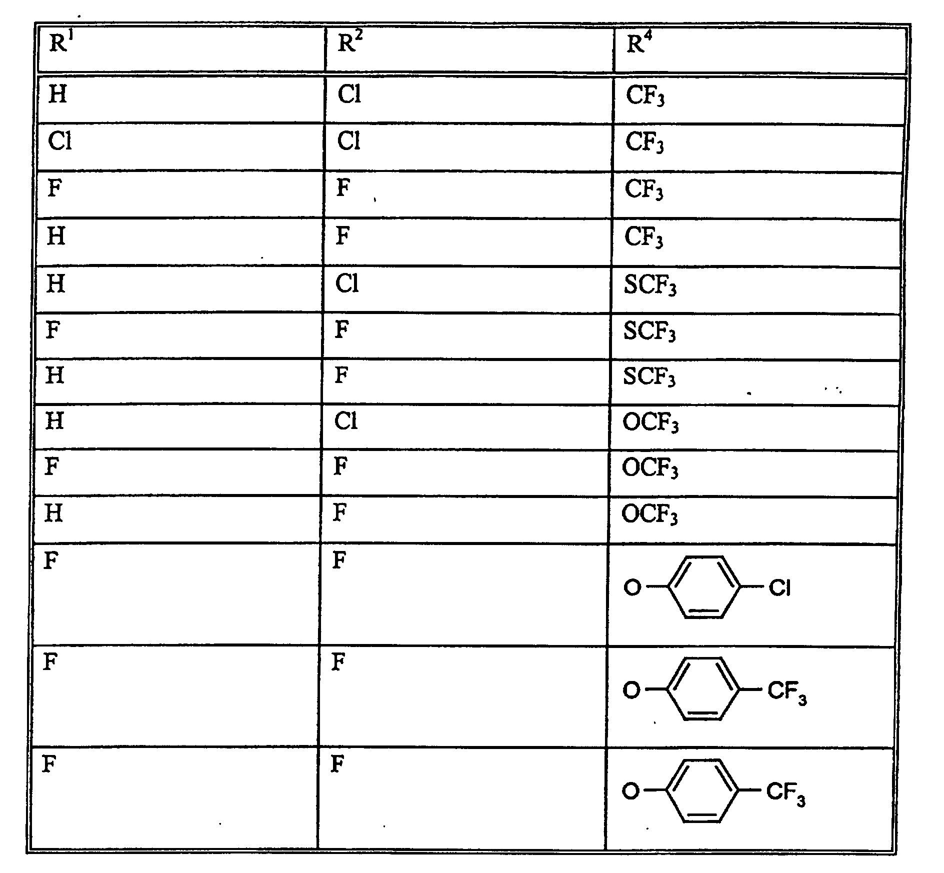

Zu den Triazinen gehören Verbindungen der Formel

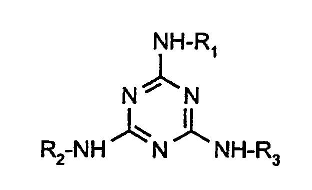

| R₁ | R₂ | R₃ |
|---|---|---|
| Cyclopropyl | H | H |
| Cyclopropyl | H | CH₃ |
| Cyclopropyl | H | C₂H₅ |
| Cyclopropyl | H | C₃H₇-n |
| Cyclopropyl | H | C₄H₉-n |
| Cyclopropyl | H | C₅H₁₁-n |
| Cyclopropyl | H | C₆H₁₃-n |
| Cyclopropyl | H | C₇H₁₅-n |
| Cyclopropyl | H | C₁₂-H₂₅-n |
| Cyclopropyl | H | CH₂-C₄H₉-t |
| Cyclopropyl | H | CH₂CH(CH₃)C₂H₅ |
| Cyclopropyl | H | CH₂CH=CH₂ |
| Cyclopropyl | Cl | C₂H₅ |
| Cyclopropyl | Cl | C₆H₁₃-n |
| Cyclopropyl | Cl | C₈H₁₇-n |
| Cyclopropyl | Cl | C₁₂H₂₅-n |
| Cyclopropyl | H | Cyclopropyl |
| Cyclopropyl | H | COCH₃ |
| Cyclopropyl | H | COCH₃ · HCl |
| Cyclopropyl | H | COC₂H₅ · HCl |
| Cyclopropyl | H | COC₂H₅ |
| Cyclopropyl | H | COC₃H₇-n |
| Cyclopropyl | H | COC₃H₇-i |
| Cyclopropyl | H | COC₄H₉-t, HCl |
| Cyclopropyl | H | COC₄H₉-n |
| Cyclopropyl | H | COC₆H₁₃-n |
| Cyclopropyl | H | COC₁₁-H₂₃-n |
| Cyclopropyl | COCH₃ | COC₂H₅ |
| Cyclopropyl | COC₃H₇-n | COC₆H₁₃-n |
| Cyclopropyl | COCH₃ | COC₃H₇-n |
| Cyclopropyl | COC₂H₅ | COC₃H₇-n |
| Cyclopropyl | H | COCyclopropyl |
| Cyclopropyl | COCyclopropyl | COCyclopropyl |
| Cyclopropyl | COCH₃ | COCH₃ |
| Isopropyl | H | H |
| Isopropyl | H | COCH₃ |
| Isopropyl | H | COC₃H₇-n |
| Cyclopropyl | H | CONHCH₃ |
| Cyclopropyl | H | CONHC₃H₇-i |
| Cyclopropyl | CONHCH₃ | CONHCH₃ |
| Cyclopropyl | H | CSNHCH₃ |
| Cyclopropyl | H | CONHCH₂CH=CH₂ |
| Cyclopropyl | CONHCH₂CH=CH₂ | CONHCH₂CH=CH₂ |
| Cyclopropyl | CSNHCH₃ | CSNHCH₃ |

Zu den Agonisten oder Antagonisten der nicotinergen Acetylcholinrezeptoren von Insekten gehören die bekannten Verbindungen aus z.B. Europäische Offenlegungsschriften Nr. 464 830, 428 941, 425 978, 386 565, 383 091, 375 907, 364 844, 315 826, 259 738, 254 859, 235 725, 212 600, 192 060, 163 855, 154 178, 136 636, 303 570, 302 833, 306 696, 189 972, 455 000, 135 956, 471 372, 302 389; Deutsche Offenlegungsschriften Nr. 3 639 877, 3 712 307; Japanische Offenlegungsschriften Nr. 3 639 877, 3 712 307; Japanische Offenlegungsschriften Nr. 03 220 176, 02 207 083, 63 307 857, 63 287 764, 03 246 283, 04 9371, 03 279 359, 03 255 072; US-Patentschriften Nr. 5 034 524, 4 948 798, 4 918 086, 5 039 686, 5 034 404; PCT-Anmeldungen Nr. WO 91/17 659, 91/4965; Französische Anmeldung Nr. 2 611 114; Brasilianische Anmeldung Nr. 88 03 621.

Diese Verbindungen lassen sich bevorzugt durch die allgemeine Formel (I) wiedergeben 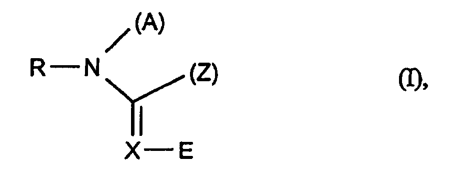 in welcher
- R: für Wasserstoff, gegebenenfalls substituierte Reste der Gruppe Acyl, Alkyl, Aryl, Aralkyl, Heteroaryl oder Heteroarylalkyl steht;
- A: für eine monofunktionelle Gruppe aus der Reihe Wasserstoff, Acyl, Alkyl, Aryl steht oder für eine bifunktionelle Gruppe steht, die mit dem Rest Z verknüpft ist;
- E: für einen elektronenziehenden Rest wie NO₂ oder CN steht;
- X: für die Reste -CH= oder =N- steht, wobei der Rest -CH= an der Stelle des H-Atoms mit dem Rest Z verknüpft sein kann;
- Z: für eine monofunktionelle Gruppe aus der Reihe Alkyl, -O-R, -S-R, 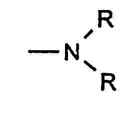 steht
oder für eine bifunktionelle Gruppe steht, die mit dem Rest A oder dem Rest X verknüpft ist.

Besonders bevorzugt sind Verbindungen der Formel (I), in welcher die Reste folgende Bedeutung haben:
- R: steht für Wasserstoff sowie für gegebenenfalls substituierte Reste aus der Reihe Acyl, Alkyl, Aryl, Aralkyl, Heteroaryl, Heteroarylalkyl.
Als Acylreste seien genannt Formyl, Alkylcarbonyl, Arylcarbonyl, Alkylsulfonyl, Arylsulfonyl, (Alkyl-)-(Aryl-)-phosphoryl, die ihrerseits substituiert sein können.
Als Alkyl seien genannt C₁₋₁₀-Alkyl, insbesondere C₁₋₄-Alkyl, im einzelnen Methyl, Ethyl, i-Propyl, sec.- oder t.-Butyl, die ihrerseits substituiert sein können.
Als Aryl seien genannt Phenyl, Naphthyl, insbesondere Phenyl.
Als Aralkyl seien genannt Phenylmethyl, Phenethyl.
Als Heteroaryl seien genannt Heteroaryl mit bis zu 10 Ringatomen und N, O, S insbesondere N als Heteroatomen. Im einzelnen seien genannt Thienyl, Furyl, Thiazolyl, Imidazolyl, Pyridyl, Benzthiazolyl.
Als Heteroarylalkyl seien genannt Heteroarylmethyl, Heteroarylethyl mit bis zu 6 Ringatomen und N, O, S, insbesondere N als Heteroatomen.
Als Substituenten seien beispielhaft und vorzugsweise aufgeführt:
Alkyl mit vorzugsweise 1 bis 4, insbesondere 1 oder 2 Kohlenstoffatomen, wie Methyl, Ethyl, n- und i-Propyl und n-, i- und t-Butyl; Alkoxy mit vorzugsweise 1 bis 4, insbesondere 1 oder 2 Kohlenstoffatomen, wie Methoxy, Ethoxy, n- und i-Propyloxy und n-, i- und t-Butyloxy; Alkylthio mit vorzugsweise 1 bis 4, insbesondere 1 oder 2 Kohlenstoffatomen, wie Methylthio, Ethylthio, n- und i-Propylthio und n-, i- und t-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl; Hydroxy; Halogen, vorzugsweise Fluor, Chlor, Brom und Jod, insbesondere Fluor, Chlor und Brom; Cyano; Nitro; Amino; Monoalkyl- und Dialkylamino mit vorzugsweise 1 bis 4, insbesondere 1 oder 2 Kohlenstoffatomen je Alkylgruppe, wie Methylamino, Methyl-ethylamino, n- und i-Propylamino und Methyl-n-butylamino; Carboxyl; Carbalkoxy mit vorzugsweise 2 bis 4, insbesondere 2 oder 3 Kohlenstoffatomen, wie Carbomethoxy und Carboethoxy; Sulfo (-SO₃H); Alkylsulfonyl mit vorzugsweise 1 bis 4, insbesondere 1 oder 2 Kohlenstoffatomen, wie Methylsulfonyl und Ethylsulfonyl; Arylsulfonyl mit vorzugsweise 6 oder 10 Arylkohlenstoffatomen, wie Phenylsulfonyl sowie Heteroarylamino und Heteroarylalkylamino wie Chlorpyridylamino und Chlorpyridylmethylamino:
- A: steht besonders bevorzugt für Wasserstoff sowie für gegebenenfalls substituierte Reste aus der Reihe Acyl, Alkyl, Aryl, die bevorzugt die bei R angegebenen Bedeutungen haben. A steht ferner für eine bifunktionelle Gruppe. Genannt sei gegebenenfalls substituiertes Alkylen mit 1-4, insbesondere 1-2 C-Atomen, wobei als Substituenten die weiter oben aufgezählten Substituenten genannt seien und wobei die Alkylengruppen durch Heteroatome aus der Reihe N, O, S unterbrochen sein können.
- A und Z: können gemeinsam mit den Atomen, an welche sie gebunden sind, einen gesättigten oder ungesättigten heterocyclischen Ring bilden. Der heterocyclische Ring kann weitere 1 oder 2 gleiche oder verschiedene Heteroatome und/oder Heterogruppen enthalten. Als Heteroatome stehen vorzugsweise Sauerstoff, Schwefel oder Stickstoff und als Heterogruppen N-Alkyl, wobei Alkyl der N-Alkyl-Gruppe vorzugsweise 1 bis 4, insbesondere 1 oder 2 Kohlenstoffatome enthält. Als Alkyl seien Methyl, Ethyl, n- und i-Propyl und n-, i- und t-Butyl genannt. Der heterocyclische Ring enthält 5 bis 7, vorzugsweise 5 oder 6 Ringglieder.

Als Beispiele für den heterocyclischen Ring seien Pyrrolidin, Piperidin, Piperazin, Hexamethylenimin, Hexahydro-1,3,5-triazin, Morpholin genannt, die gegebenenfalls bevorzugt durch Methyl substituiert sein können.
- E: steht für einen elektronentziehenden Rest, wobei insbesondere NO₂, CN, Halogenalkylcarbonyl wie 1,5-Halogen-C₁₋₄-carbonyl, insbesondere COCF₃ genannt seien.
- X: steht für -CH= oder -N=
- Z: steht für gegebenenfalls substituierte Reste Alkyl, -OR, -SR, -NRR, wobei R und die Substituenten bevorzugt die oben angegebene Bedeutung haben.
- Z: kann außer dem obengenannten Ring gemeinsam mit dem Atom, an welches es gebunden ist und dem Rest 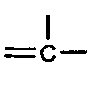 an der Stelle von X einen gesättigten oder ungesättigten heterocyclischen Ring bilden. Der heterocyclische Ring kann weitere 1 oder 2 gleiche oder verschiedene Heteroatome und/oder Heterogruppen enthalten. Als Heteroatome stehen vorzugsweise Sauerstoff, Schwefel oder Stickstoff und als Heterogruppen N-Alkyl, wobei die Alkyl oder N-Alkyl-Gruppe vorzugsweise 1 bis 4, insbesondere 1 oder 2 Kohlenstoffatome enthält. Als Alkyl seien Methyl, Ethyl, n- und i-Propyl und n-, i- und t-Butyl genannt. Der heterocyclische Ring enthält 5 bis 7, vorzugsweise 5 oder 6 Ringglieder.

Als Beispiele für den heterocyclischen Ring seien Pyrrolidin, Piperidin, Piperazin, Hexamethylenimin, Morpholin und N-Methylpiperazin genannt.

Als ganz besonders bevorzugt verwendbare Verbindungen aus der Gruppe Agonisten und Antagonisten der nicotinergen Acetylcholinrezeptoren von Insekten seien Verbindungen der allgemeinen Formeln (II) und (III) genannt: 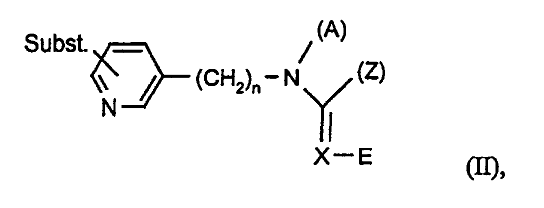 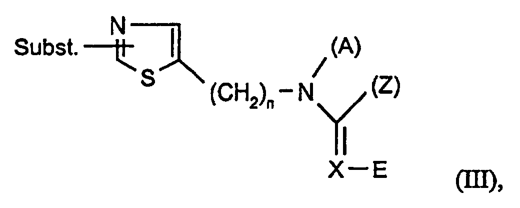 in welchen
- n: für 1 oder 2 steht,
- Subst.: für einen der oben bei den als bevorzugten oder besonders bevorzugten Bedeutungen aufgeführten Substituenten, insbesonders für Halogen, ganz besonders für Chlor, steht,
- A, Z, X und E: die bei den als bevorzugte oder besonders bevorzugte oben angegebenen Bedeutungen haben,

Im einzelnen seien folgende Verbindungen genannt:

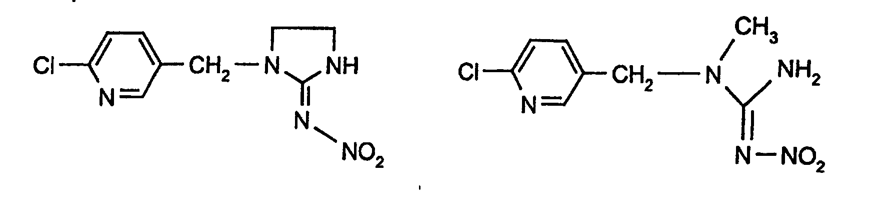

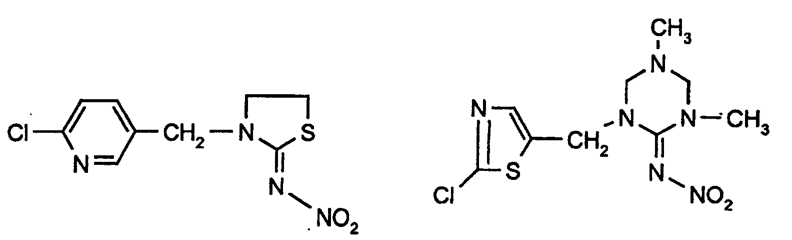

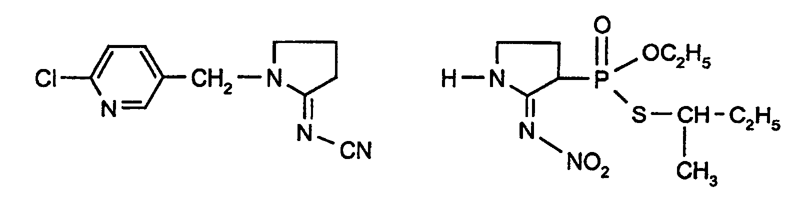

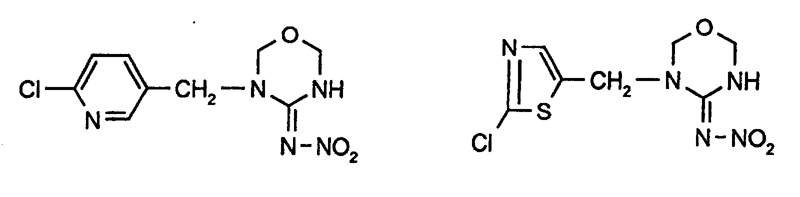

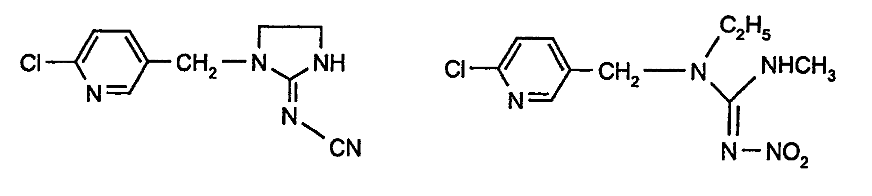

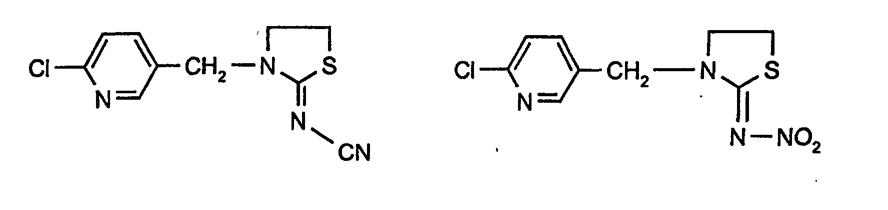

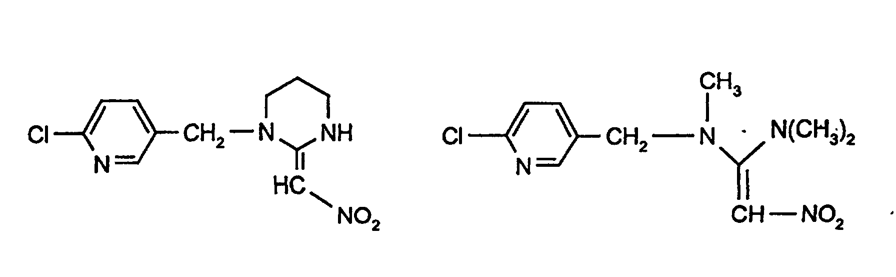

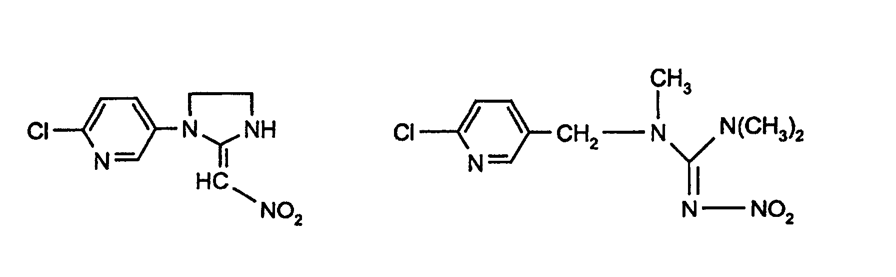

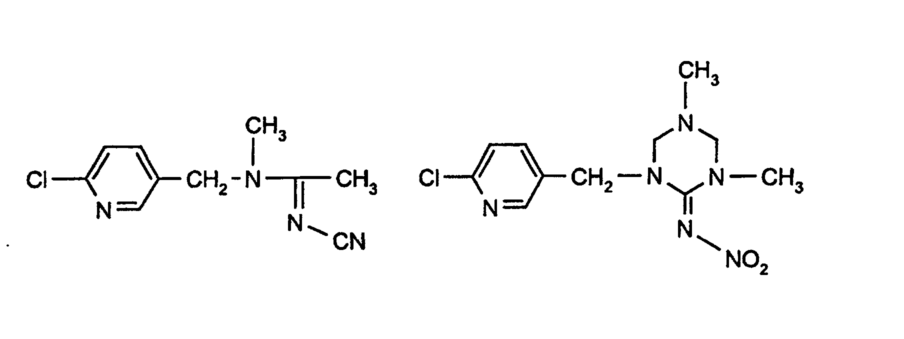

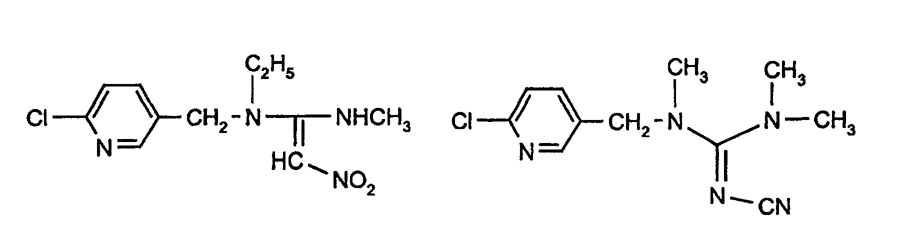

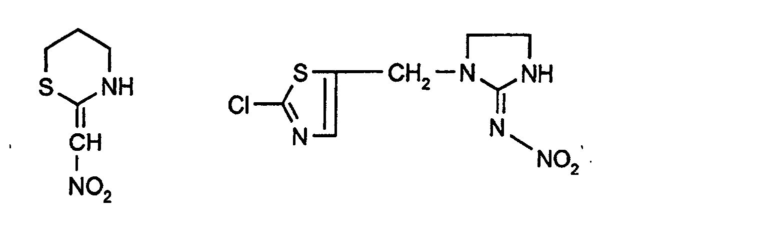

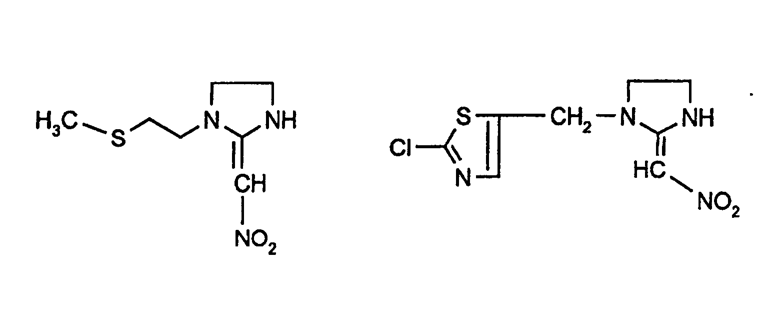

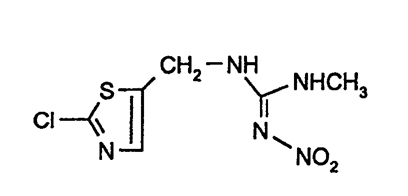

Als Fungizide seien bevorzugt genannt:
Sulfenamide wie Dichlorfluanid (Euparen), Tolylfluanid (Methyleuparen), Folpet, Fluorfolpet;
Benzimidazole wie Carbendazim (MBC), Benomyl, Fuberidazol, Thiabendazol oder deren Salze;
Thiocyanate wie Thiocyanatomethylthiobenzothiazol (TCMTB), Methylenbisthiocyanat (MBT);
quartäre Ammoniumverbindungen wie Benzyldimethyltetradecylammoniumchlorid, Benzoyl-dimethyl-dodecyl-ammoniumchlorid, Dodecyl-dimethyl-ammoniumchlorid; Morpholinderivate wie C₁₁-C₁₄-4-Alkyl-2,6-dimethyl-morpholin-homologe (Tridemorph), (±)-cis-4-[3-tert.-Butylphenyl)-2-methylpropyl]-2,6-dimethylmorpholin (Fenpropimorph), Falimorph;
Phenole wie o-Phenylphenol, Tribromophenol, Tetrachlorphenol, Pentachlorphenol, 3-Methyl-4-chlorphenol, Dichlorophen, Chlorophen oder deren Salze;
Azole wie Tridimefon, Triadimenol, Bitertanol, Tebuconazole, Propiconazole, Azaconazole, Hexaconazole, Prochloraz, Cyproconazole, 1-(2-Chlorpheriyl)-2-(1-chlorcyclopropyl)-3-(1,2,4-triazol-1-yl)-propan-2-ol, 1-(2-Chlorphenyl)-2-(1,2,4-triazol-1-yl-methyl)-3,3-dimethyl-butan-2-ol.
Iodpropargylderivate wie Iodpropargyl-butylcarbamat (IPBC), -chlorophenylformal, -phenylcarbamat, -hexylcarbamat, -cyclohexylcarbamat, Iodpropargyloxyethylphenylcarbamat;
Iodderivate wie Diiodmethyl-p-arylsulfone z.B. Diiodmethyl-p-tolylsulfon;
Bromderivate wie Bromopol;
Isothiazoline wie N-Methylisothioazolin-3-on, 5-Chloro-N-methylisothiazolin-3-on, 4,5-Dichloro-N-octylisothiazolin-3-on, N-Octylisothiazolin-3-on (Octilinone);
Benzisothiazolinone, Cyclopentenisothiazoline;
Pyridine wie 1-Hydroxy-2-pyridinthion, Tetrachlor-4-methylsulphonylpyridin;
Nitrile wie 2,4,5,6-Tetrachlorisophthalonitril (Chlorthalonil) u.a. Mikrobizide mit aktivierter Halogengruppe wie CI-Ac, MCA, Tectamer, Bromopol, Bromidox;
Benzthiazole wie 2-Mercaptobenzothiazole; s.o. Dazomet;
Chinoline wie 8-Hydroxychinolin.

Als Insektizide seien besonders bevorzugt genannt:

Phosphorsäureester wie Azinphos-ethyl, Azinphos-methyl, 1-(4-Chlorphenyl)-4-(O-ethyl, S-propyl)phosphoryloxypyrazol (TIA-230),Chlorpyrifos, Coumaphos, Demeton, Demeton-S-methyl, Diazinon, Dichlorvos, Dimethoate, Ethoprophos, Etrimfos, Fenitrothion, Fention, Heptenophos, Parathion, Parathion-methyl, Phosalone, Phoxion, Pirimiphos-ethyl, Pirimiphos-methyl, Profenofos, Prothiofos, Sulprofos, Triazophos und Trichlorphon.

Carbamate wie Aldicarb, Bendiocarb, BPMC (2-(1-Methylpropyl)phenylmethylcarbamat), Butocarboxim, Butoxycarboxim, Carbaryl, Carbofuran, Carbosulfan, Cloethocarb, Isoprocarb, Methomyl, Oxamyl, Pirimicarb, Promecarb, Propoxur und Thiodicarb.

Pyrethroide wie Allethrin, Alphamethrin, Bioresmethrin, Byfenthrin (FMC 54 800), Cycloprothrin, Cyfluthrin, Decamethrion, Cyhalothrin, Cypermethrin, Deltamethrin, Alpha-cyano-3-phenyl-2-methylbenzyl-2,2-dimethyl-3-(2-chlor-2-trifluormethylvinyl)-cyclopropancarboxylat, Fenpropathrin, Fenfluthrin, Fenvalerate, Flucythrinate, Flumethrin, Fluvalinate, Permethrin und Resmethrin; Nitroimino und Nitroimide wie 1-[(6-Chlor-3-pyridinyl)-methyl]-4,5-dihydro-N-nitro-1H-imidazol-2-amin (Imidacloprid).

Als Herbizide seien beispielsweise Anilide genannt, wie z.B. Diflufenican und Propanil; Arylcarbonsäuren, wie z.B. Dichlorpicolinsäure, Dicamba und Picloram; Aryloxyalkansäuren, wie z.B. 2,4-D, 2,4-DB, 2,4-DP, Fluroxypyr, MCPA, MCPP und Triclopyr, Aryloxy-phenoxy-alkansäureester, wie z.B. Diclofop-methyl, Fenoxapropethyl, Fluazifop-butyl, Haloxyfop-methyl und Quizalofop-ethyl; Azinone, wie z.B. Chloridazon und Norflurazon; Carbamate, wie z.B. Chlorpropham, Desmedipham, Phenmedipham und Propham; Chloracetanilide, wie z.B. Alachlor, Acetochlor, Butachlor, Metazachlor, Metolachlor, Pretilachlor und Propachlor; Dinitroaniline, wie z.B. Oryzalin, Pendimethalin und Trifluralin; Diphenylether, wie z.B. Acifluorfen, Bifenox, Fluoroglycofen, Fomesafen, Halosafen, Lactofen und Oxyfluorfen; Harnstoffe, wie z.B. Chlortoluron, Diuron, Flometuron, Isoproturon, Linuron und Methabenzthiazuron; Hydroxylamine, wie z.B. Alloxydim, Clethodim, Cycloxydim, Sethoxydim und Tralkoxydim; Imidazolinone, wie z.B. Imazethapyr, Imazamethabenz, Imazapyr und Imazaquin; Nitrile, wie z.B. Bromoxynil, Dichlorbenil und Ioxynil; Oxacetamide, wie z.B. Mefenacet; Sulfonylhamstoffe, wie z.B. Amidosulfuron, Bensulfuron-methyl, Chlorimuron-ethyl, Chlorsulfuron, Cinosulfuron, Metsulfuronmethyl, Nicosulfuron, Primisulfuron, Pyrazosulfuron-ethyl, Thifensulfuron-methyl, Triasulfuron und Tribenuron-methyl; Thiocarbamate, wie z.B. Butylate, Cycloate, Diallate, EPTC, Esprocarb, Molinate, Prosulfocarb, Thiobvencarb und Triallate; Triazine, wie z.B. Atrazin, Cyanazin, Simazin, Simetryne, Terbutryne und Terbutylazin; Triazinone, wie z.B. Hexazinon, Metamitron und Metnbuzin; Sonstige, wie z.B. Aminotriazol, Benfuresate, Bentazone, Cinmethylin, Clomazone, Clopyralid, Difenzoquat, Dithiopyr, Ethofilmesate, Fluorochloride, Glufosinate, Glyphosate, Isoxaben, Pyridate, Quinchlorac, Quinmerac, Sulphosate und Tridiphane.

Die erfindungsgemäßen Formkörper enthalten 0,1 bis 70 Gew.-% Wirkstoff, bevorzugt 1 bis 65 Gew.-% Wirkstoff, besonders bevorzugt 5 bis 60 Gew.-% Wirkstoff.

Wasserunlösliche, thermoplastisch verarbeitbare Polymere sind solche mit einer Verarbeitungstemperatur von 60 bis 210°C, vorzugsweise 80 bis 150°C und einer Löslichkeit von weniger als 100 mg in einem Liter Wasser bei 20°C.

Zur Herstellung der erfindungsgemäßen Formkörper sind Vinylacetatpolymere besonders gut geeignet. Als Vinylacetatpolymere seien genannt Polyvinylacetat und Vinylacetatcopolymere, sofern diese wasserunlöslich sind.

Bevorzugt werden Ethylenvinylacetatcopolymere. Besonders bevorzugt sind Ethylenvinylacetatcopolymere mit einem Vinylacetatgehalt von 30 bis 80 %. Es ist auch möglich, Ethylenvinylacetatcopolymere einzusetzen, bei denen die Acetatgruppen ganz oder teilweise zu Alkoholgruppen verseift sind.

Bevorzugte wasserlösliche Polymere sind Polyvinylpyrrolidon und Copolymerisate des Vinylpyrrolidons, wobei als Comonomer Vinylacetat genannt sei. Bevorzugt sind Copolymerisate aus Polyvinylpyrrolidon und Vinylacetat.

Das Gewichtsverhältnis von wasserunlöslichem, thermoplastisch verarbeitbarem Polymer zu wasserlöslichem Polymer beträgt 15:85 bis 60:40, vorzugsweise 30:70 bis 60:40.

Die erfindungsgemäßen Folmkötper können übliche Zusatzstoffe, wie Füllstoffe, Weichmacher, Stabilisatoren und Gleitmittel enthalten. Beispiele für Füllstoffe sind Kalziumcarbonat, Magnesiumcarbonat, Siliziumdioxid, Tonerden, Silikate, Talkum. Als Weichmacher sind Ester der Phthalsäure und Sebazinsäure sowie oligomere Ethylenoxide gut geeignet.

Die erfindungsgemäßen Formkörper lassen sich durch Extrusion oder Spritzgießen aus den entsprechenden Blends herstellen. Die Blends können aus den Einzelkomponenten durch bekannte Mischtechniken hergestellt werden, beispielsweise durch Kneten in der Schmelze, durch Extrusion oder durch Lösen in einem gemeinsamen Lösungsmittel aus denen die Blends durch Ausfällen mit einem Fällmittel oder durch Abdampfen des Lösungsmittels gewonnen werden können. Die Verarbeitung durch Extrusion ist bevorzugt.

Die erfindungsgemäßen Formkörper zeigen eine hohe Freisetzungsrate des Wirkstoffs und eine sehr geringe Quellung in Wasser. Im allgemeinen beträgt die Quellung weniger als 15 %. Die Quellung wird als relative Gewichtszunahme nach Lagerung in Wasser definiert. Zur Bestimmung der Quellung werden zylindrische Probekörper mit einer Länge von 16 mm und einem Durchmesser von 4 mm unterschiedliche Zeiten (24 h, 72 h, 120 h) in Wasser getaucht und das Gewicht nach Entfernen des oberflächlich anhaftenden Wassers ermittelt.

Die Volumenkonstanz der Formkörper ist besonders wichtig, wenn diese Formkörper zur Behandlung einzelner Pflanzen als Implantat eingesetzt werden. Biologische Tests ergaben nämlich, dass Implantate, die in Wasser deutlich quellen, schlecht von der Pflanze vertragen werden. Darüber hinaus ist die Wirkstoffabgabe von quellbaren Implantaten in die Saftbahn einer Pflanze ungünstig. Eine Volumenvergrößerung von nicht mehr als dem freien Volumen zwischen vorgeformtem Hohlraum und Implantat ist im allgemeinen unkritisch.

Die agrochemischen Wirkstoffe lassen sich in die Polymerkomponenten einarbeiten, wobei in einfacher Weise, d.h. auch bei niedrigen Scherkräften und kurzen Mischzeiten, eine homogene Verteilung des Wirkstoffs erreicht wird. Die wirkstoffhaltigen Blends zeichnen sich durch eine leichte Verarbeitbarkeit, insbesondere durch Spritzgießen, aus.

Die wirkstoffhaltigen Blends können in Form von Folien, Netzen, Fliesen, Geweben oder Bändern eingesetzt werden. Es ist auch möglich, Pflanzgefäße, beispielsweise Töpfe für die Anzucht aus diesem Material herzustellen.

Besonders bevorzugt können die erfindungsgemäßen Blends in der Form von Formkörpern zur Behandlung einzelner Pflanzen, wie z.B. Bäumen, eingesetzt werden. Sie werden dafür vorzugsweise in der Form geeigneter Formkörper wie Stäbe, Stifte, Nadeln, Nieten, Zapfen, Klammern, Drähten, Kugeln, Tabletten oder Platten in den Saftstrom der Pflanze eingebracht. Vorzugsweise wird zunächst eine Höhlung erzeugt, in die der Formkörper als Implantat eingebracht wird.

### Beispiel 1

### Herstellung eines erfindungsgemäßen Blends und Formkörpers

### a) Polymermischung

In einem Zweiwellenextruder wurde bei einer Umdrehungszahl von 80 rpm, einer Schmelzentemperatur von 150°C und einer Düsenaustrittstemperatur von 175°C ein Compound aus 50 Teilen Polyvinylacetat (Moviol 50), 50 Teilen Poly(pyrrolidon-covinylacetat) (Luviskol VA64) und 1 Teil hochdispersem Siliziumdioxid (HDK H2000) ein Polymerstrang hergestellt und mit einem Granulator zerkleinert.

### b) Wirkstoffhaltiger Blend

75 Teile des Granulates aus 1a) und 25 Teile Imidachlorid wurden im Zweiwellenextruder bei einer Umdrehungszahl von 80 rpm, einer Schmelzentemperatur von 145°C und einer Düsenaustrittstemperatur von 165°C gemischt und anschließend granuliert.

### c) Wirkstoffhaitiger Formkörper

In einer Spritzgussmaschine wurden bei einer Schmelzentemperatur von 150°C, einer Düsentemperatur von 155°C und einer Werkzeugtemperatur wirkstoffhaltige zylindrische Formkörper (Länge: 16 mm, Durchmesser: 4 mm) aus dem Blend 1b) hergestellt.

### Beispiel 2

### Herstellung erfindungsgemäßer Blends und Formkörper

### a) Polymermischung

Entsprechend der unter 1a) beschriebenen Arbeitsweise wurden 50 Teile getrocknetes Poly(vinylacetat-co-ethylen) (Levapren 450) und 50 Teile getrocknetes Polyvinylpyrrolidon (Luviskol K30) gemischt und zu einem Granulat verarbeitet.

### b) Wirkstoffhaltiger Blend

50 Teile des Granulates aus 2a) und 50 Teile Imidachlorid wurden im Zweiwellenextruder bei einer Umdrehungszahl von 60 rpm, einer Schmelzentemperatur von 140°C und einer Düsenaustrittstemperatur von 165°C gemischt und anschließend granuliert.

### c) Wirkstoffhaltiges Implantat

In einer Spritzgussmaschine wurden bei einer Schmelzentemperatur von 150°C, einer Düsentemperatur von 155°C und einer Werkzeugtemperatur von 50°C wirkstoffhaltige Formkörper mit den oben beschriebenen Abmessungen aus dem Blend 2b) hergestellt.

### Beispiel 3-5

### Herstellung von erfindungsgemäßen Blends und Formkörpern

### a) Polymermischung

Entsprechend der unter 1a) beschriebenen Arbeitsweise wurden 40 Teile getrocknetes Poly(vinylacetat-co-ethylen) (Levapren 700) und 60 Teile getrocknetes Poly(vinylpyrrolidon-co-vinylacetat) (Luviskol VA64) gemischt und zu einem Granulat verarbeitet.

### b) Wirkstoffhaltige Blends

In einem Zweiwellenextruder wurden bei einer Umdrehungszahl von 100 rpm, einer Schmelzentemperatur von 140°C und einer Düsenaustrittstemperatur von 165°C wirkstoffhaltige Blends der folgenden Zusammensetzung hergestellt.

| | | |
|---|---|---|
| Beispiel 3b | 75,0 Teile Granulat aus 3a) | 25 Teile Imidachlorid |
| Beispiel 4b | 66,7 Teile Granulat aus 3a) | 33,3 Teile Imidachlorid |
| Beispiel 5b | 50,0 Teile Granulat aus 3a) | 50 Teile Imidachlorid |

### c) Wirkstoffhaltiger Formkörper

In einer Spritzgussmaschine wurden bei einer Schmelzentemperatur von 135°C, einer Düsentemperatur von 147°C und einer Werkzeugtemperatur von 44°C wirkstoffhaltige Formkörper mit den oben beschriebenen Abmessungen aus den Blends 3b), 4b) und 5b) hergestellt.

### Beispiel A, Vergleichsversuch

### Herstellung einer Polymermischung gemäß EP 0 344 118

### a) Polymermischung

Entsprechend den Angaben aus Beispiel 1, Nr.5 wurde ein Blend aus 90 Teilen Gelatine und 10 Teilen Polystyrol hergestellt.

### b) Wirkstoffhaltiger Blend

75 Teile des Granulates aus Aa) und 25 Teile Imidachlorid wurden im Zweiwellenextruder bei einer Umdrehungszahl von 60 rpm, einer Schmelzentemperatur von 155°C und einer Düsenaustrittstemperatur von 165°C gemischt und anschließend granuliert.

### c) Wirkstoffhaltiger Formkörper

In einer Spritzgussmaschine wurden bei einer Schmelzentemperatur von 155°C, einer Düsentemperatur von 165°C und einer Werkzeugtemperatur von 45°C Formkörper mit den unter 1 beschriebenen Abmessungen aus dem Blend Ab) hergestellt.

### d) Wirkstofffreie Formkörper

Zum weiteren Vergleich wurde auch das wirkstofffreie Granulat Aa) unter den in Ac) genannten Bedingungen zu Formkörpern verarbeitet.

### Bestimmung der Quellung

Jeweils 9 Formkörper aus den Beispielen 1 bis 5 und A, deren individuelles Trockengewicht zuvor genau bestimmt worden war, wurden in einem 51-Wasserbehälter mit Überlauf gelagert, wobei 1 l/h frisches Wasser in den Behälter eingeleitet wurde. Nach 24 h, 78 h und 120 h wurden jeweils 3 Probekörper entnommen, oberflächlich von anhaftendem Wasser durch Abwischen mit einem Wattebausch befreit und das Gewicht mₙₐₛₛ ermittelt. Als Quellwert wurde die Größe (mₙₐₛₛ-mₒ)^{·}100/mₒ definiert.

| **Formkörper** | **24 h** | **72 h** | **120 h** |
|---|---|---|---|
| 1c | 10,4% | 8,5% | 2,5% |
| 2c | 5,9% | 1,2% | -3,1% |
| 3c | 3,6% | -1,6% | -8,1% |
| 4c | 3,3% | -1,0% | -7,2% |
| 5c | 8,5% | 0,6% | -4,0% |
| Ac | 461% | 2115% | 2133% |
| Ad | 595% | 1870% | 2895% |

## Patentansprüche

1. Formkörper zur Behandlung von Holzgewächsen, **gekennzeichnet durch** einen Gehalt an
a) mindestens einem agrochemischen Wirkstoff,
b) einem wasserunlöslichen, thermoplastisch verarbeitbaren Polymer ausgewählt aus der Gruppe bestehend aus Polyvinylacetat und Poly-(vinylacetat-co-ethylen),
c) einem wasserlöslichen Polymer ausgewählt aus der Gruppe bestehend aus Poly-(pyrrolidon-co-vinylacetat) und Polyvinylpyrrolidon und
d) gegebenenfalls Hilfsstoffen.

2. Formkörper gemäß Anspruch 1, **dadurch gekennzeichnet, dass** als agrochemischer Wirkstoff ein Insektizid, Fungizid oder Herbizid enthalten ist.

3. Formkörper gemäß Anspruch 1, **dadurch gekennzeichnet, dass** als agrochemischer Wirkstoff Imidacloprid enthalten ist.

4. Formkörper gemäß Anspruch 1, **dadurch gekennzeichnet, dass** als agrochemischer Wirkstoff Glyphosate enthalten ist.

5. Formkörper gemäß Anspruch 1, **dadurch gekennzeichnet, dass** das Gewichtsverhältnis von wasserunlöslichem, thermoplastisch verarbeitbaren Polymer zu wasserlöslichem Polymer zwischen 15:85 und 60:40 liegt.

6. Formkörper gemäß Anspruch 1, **dadurch gekennzeichnet, dass** der Gehalt an agrochemischem Wirkstoff zwischen 0,1 und 70 Gew.-% beträgt.

7. Verfahren zur Herstellung von Formkörpern gemäß Anspruch 1, **dadurch gekennzeichnet, dass** man ein Gemisch aus
a) mindestens einem agrochemischen Wirkstoff,
b) einem wasserunlöslichen, thermoplastisch verarbeitbaren Polymer ausgewählt aus der Gruppe bestehend aus Polyvinylacetat und Poly-(vinylacetat-co-ethylen),
c) einem wasserlöslichen Polymer ausgewählt aus der Gruppe bestehend aus Poly-(pyrrolidon-co-vinylacetat) und Polyvinylpyrrolidon und
d) gegebenenfalls Hilfsstoffen,
extrudiert oder durch Spritzgießen verarbeitet

## Claims

1. Shaped articles for the treatment of woody plants, **characterized by** a content of
a) at least one agrochemical active ingredient,
b) a water-insoluble, thermoplastically processable polymer chosen from the group consisting of polyvinyl acetate and poly(vinyl acetate-co-ethylene),
c) a water-soluble polymer chosen from the group consisting of poly-(pyrrolidone-co-vinyl acetate) and polyvinylpyrrolidone and
d) optionally auxiliaries

2. Shaped articles according to Claim 1, **characterized in that** the agrochemical active ingredient present is an insecticide, fungicide or herbicide.

3. Shaped articles according to Claim 1, **characterized in that** the agrochemical active ingredient present is imidacloprid.

4. Shaped articles according to Claim 1, **characterized in that** the agrochemical active ingredient present is glyphosate.

5. Shaped articles according to Claim 1, **characterized in that** the weight ratio of water-insoluble, thermoplastically processable polymer to water-soluble polymer is between 15:85 and 60:40.

6. Shaped articles according to Claim 1, **characterized in that** the content of agrochemical active ingredient is between 0.1 and 70% by weight.

7. Process for the preparation of moulded articles according to Claim 1, **characterized in that** a mixture of
a) at least one agrochemical active ingredient,
b) a water-insoluble, thermoplastically processable polymer chosen from the group consisting of polyvinyl acetate and poly(vinyl acetate-co-ethylene),
c) a water-soluble polymer chosen from the group consisting of poly-(pyrrolidone-co-vinyl acetate) and polyvinylpyrrolidone and
d) optionally auxiliaries,
is extruded or processed by injection moulding.

## Revendications

1. Corps moulés destinés au traitement de végétaux ligneux, **caractérisés par** une teneur en
a) au moins une substance active agrochimique,
b) un polymère insoluble dans l'eau, susceptible de mise en oeuvre thermoplastique, choisi dans le groupe constitué d'un polymère d'acétate de vinyle et d'un copolymère d'acétate de vinyle et d'éthylène,
c) un polymère soluble dans l'eau choisi dans le groupe constitué d'un copolymère de polyrrolidone et d'acétate de vinyle et d'un polymère de vinylpyrrolidone et
d) le cas échéant des substances auxiliaires.

2. Corps moulés suivant la revendication 1, **caractérisés en ce qu'**ils contiennent comme substance active agrochimique un insecticide, un fongicide ou un herbicide.

3. Corps moulés suivant la revendication 1, **caractérisés en ce qu'**ils contiennent de l'imidaclopride comme substance active agrochimique.

4. Corps moulés suivant la revendication 1, **caractérisés en ce qu'**ils contiennent du glyphosate comme substance active agrochimique.

5. Corps moulés suivant la revendication 1, **caractérisés en ce que** le rapport en poids du polymère insoluble dans l'eau susceptible de mise en oeuvre thermoplastique au polymère soluble dans l'eau est compris entre 15:85 et 60:40.

6. Corps moulés suivant la revendication 1, **caractérisés en ce que** la teneur en substance active agrochimique s'élève entre 0,1 et 70 % en poids.

7. Procédé de production de corps moulés suivant la revendication 1, **caractérisé en ce qu'**on extrude un mélange
a) d'au moins une substance active agrochimique,
b) d'un polymère insoluble dans l'eau susceptible de mise en oeuvre thermoplastique choisi dans le groupe constitué d'un polymère d'acétate de vinyle et d'un copolymère d'acétate de vinyle et d'éthylène,
c) d'un polymère soluble dans l'eau choisi dans le groupe constitué d'un copolymère de pyrrolidone et d'acétate de vinyle et d'un polymère de vinylpyrrolidone et
d) le cas échéant de substances auxiliaires,
ou on transforme par moulage par injection la matière extrudée.
